# EUROPÄISCHE PATENTANMELDUNG

(11) **EP 0 826 913 A1**
(43) Veröffentlichungstag der Anmeldung: **04.03.1998**
(21) Anmeldenummer: 97114652.7
(22) Anmeldetag: 23.08.1997
(51) Int. Cl.: F16J 15/34, F16J 15/36

(54) **Selbststeuernde Dichtungsanordnung**

(30) Priorität: 28.08.1996 US 703949
(71) Anmelder: Firma Carl Freudenberg, 69469 Weinheim (DE)
(72) Erfinder: Holt, Robert S., 03217 Ashland, New Hampshire (US); Ice, Kevin F., Concord, New Hamsphire 03301 (US)

(57) **Zusammenfassung**

Es wird eine selbstführende Dichtungsanordnung (16) für eine drehbare Welle einer Pumpeneinheit angegeben, welche eine Dichtkopfanordnung (20) umfaßt, welche in konstantem Kontakt mit einer Dichtsitzanordnung (18) ist. Die Dichtkopfanordnung (20) umfaßt einen elastomeren Dichtungsschuh (26), einen Federsitz (32), einen Ring (28) und eine Feder (34), welche alle um eine Dichtscheibe (30) angeordnet sind. Die Dichtsitzanordnung (18) umfaßt einen keramischen, radialen Dichtsitz (24), welcher in dem elastomeren Dichtungsschuhteil (26) angeordnet ist. Die Dichtscheibe (30) ist in konstantem Kontakt mit der Dichtsitzanordnung (18), um ein Austreten von Fluid zwischen und um das Wellenteil (40) zu verhindern.

## Beschreibung

Die Erfindung befaßt sich mit Dichtungen und mit dem Abdichten, und insbesondere mit einer selbststeuernden bzw. selbstführenden Dichtungskopfanordnung für eine Welle.

Rotierende, mechanische Flächendichtungsanordnungen werden im allgemeinen bei Wasserpumpen von Fahrzeugen und ähnlichen Dichtungsanwendungen mit relativ geringem hydraulischem Druck eingesetzt, welche in typischer Weise einen Dichtungsschuh aus einem verformbaren, elastomeren Material, einen Dichtsitz, eine Dichtungsscheibe, eine Feder zum Vorbelasten der Dichtungsscheibe gegen den Dichtsitz und eine Einrichtung umfassen, welche die Komponenten in Dichtungszuordnung bezüglich eines stationären Gehäuses und einer sich drehenden Welle halten, welche durch die Bohrung des Gehäuses geht ist.

Ein Teil der axialen Dichtungskraft resultiert aus dem Dichtungsschuh, welcher aus einem unbelasteten ausgeformten Zustand in einen verformten Einsatzzustand überführt wird. Die für die Verformung erforderliche Kraft trägt im wesentlichen nicht aktiv zu der Dichtung bei, und gegebenenfalls könnte sie nur dazu führen, daß die Relaxation und die Alterung des Elastomers vermindert werden. Federn, welche normalerweise bei diesen Anordnungen eingesetzt werden, haben üblicherweise Nennfederkräfte, welche beträchtlich größer als die minimale Kraft ist, welche erforderlich ist, um eine geeignete Dichtung sicherzustellen, selbst nach Ausgleichen von möglicherweise auftretenden axialen Toleranzen der zusammengesetzten Komponenten.

Übliche Dichteinrichtungen werden nachteilig durch Veränderungen hinsichtlich der Dichtflächenschmierung, der Exzentrizität und durch einen unrunden Lauf beeinfluß, wobei alle diese Erscheinungen zu der Einwirkung einer Seitenkraft an der Dichtfläche führen. Diese Seitenkraft bewirkt eine radiale Verlagerung und ein Moment, welches dazu führen kann, daß die Dichtungsscheibe den Dichtflächenkontakt verliert. Wenn die Kraft einmal aufgehoben ist, schließen die Dichtflächen unter Krafteinwirkung, wodurch ein Fluid austritt und sich unerwünschte Geräusche ergeben. Daher besteht ein Bedürfnis nach einer selbststeuernden bzw. selbstführenden Dichtungsanordnung, welche ständig einen Dichtflächenkontakt bei allen Betriebsverhältnissen aufrecht erhält.

Ein Hauptziel der Erfindung ist es, eine selbststeuernde bzw. selbstführende Dichtungsanordnung bereitzustellen.

Ferner soll nach der Erfindung eine Dichtung bereitgestellt werden, bei der konstant ein Dichtflächenkontakt an der Dichtfläche aufrechterhalten wird.

Ferner soll nach der Erfindung eine radiale Verlagerung der Dichtfläche durch die Übertragung irgendeiner Seitenbelastung auf den Federsitz und schließlich auf das Gehäuse vermieden werden.

Nach der Erfindung wird hierzu eine selbststeuernde bzw. selbst führende Dichtungsanordnung bereitgestellt, welche im Hauptanspruch angegeben ist.

Bevorzugte weitere Ausgestaltungen nach der Erfindung sind in den Unteransprüchen wiedergegeben.

Nach der Erfindung umfaßt die selbststeuernde bzw. nachstehend nur noch als selbstführend bezeichnete Dichtungsanordnung einen Federsitz, welcher eine Feder in dem Federsitz umfaßt, einen Dichtungsschuh, welcher aus einem elastomeren Material hergestellt ist, welcher in Kontakt mit dem Federsitz ist, und ein ortsfestes Gehäuse. Der Dichtungsschuh umfaßt einen eingeformten Ring. Die selbstführende Dichtungsanordnung umfaßt ferner eine Dichtsitzanordnung, welche einen Umfangsdichtsitz umfaßt, welcher aus einem keramischen Werkstoff hergestellt ist. Die selbstführende Dichtungsanordnung umfaßt ferner eine Dichtscheibe, welche in konstantem Kontakt mit der Dichtsitzanordnung ist.

Ein Vorteil bei der erfindungsgemäßen Auslegung ist darin zu sehen, daß der mittelmäßige Festsitz oder der Spielsitz des rohrförmigen Abschnittes des Federsitzes eine Dämpfungswirkung erzeugt und Vorteile hinsichtlich der Selbstführung bzw. Selbststeuerung mit sich bringt. Hierdurch werden die Größe der Torsionskraft und die Radialverlagerungsschwankungen reduziert, welche ihre Ursache in der Veränderung von Reibungskoeffizienten und/oder Grenzflächenverschmutzungen haben.

Ferner wird bei der Erfindung eine radiale Verlagerung der Dichtscheibe verhindert.

Ein weiterer Vorteil der Erfindung ist darin zu sehen, daß sich Geräuscherscheinungen und Leckageerscheinungen an den Dichtgrenzflächen vermeiden lassen.

Weitere Einzelheiten, Merkmale und Vorteile der Erfindung ergeben sich aus der nachstehenden Beschreibung von bevorzugten Ausführungsformen und Bezugnahme auf die beigefügte Zeichnung. Darin zeigt:
- Fig. 1: eine Seitenansicht einer Dichtungsanordnung nach der Erfindung;
- Fig. 2: eine vergrößerte Ausschnittsansicht der erfindungsgemäßen Anordnung nach Figur 1;
- Fig. 3: eine vergrößerte Schnittansicht des Dichtkopfs;
- Fig. 4: eine übliche Dichtungseinrichtung;
- Fig. 5: eine übliche Dichtungseinrichtung mit einer einwirkenden Kraft F_{S}; und
- Fig. 6: eine schematische Ansicht einer selbstführenden Dichtungsanordnung mit einer einwirkenden Kraft F_{S}.

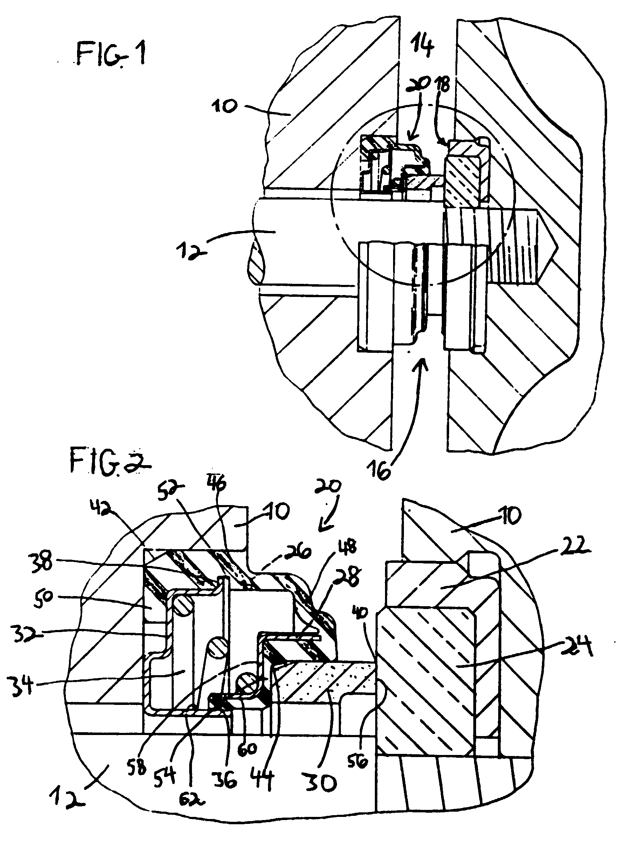

Unter Bezugnahme auf die Figuren 1 bis 6 der Zeichnung ist eine selbstführende Dichtungsanordnung 16 in einem Gehäuse 10 gezeigt, welches eine Welle 12 einer Pumpe, wie einer Wasserpumpe einer Brennkraftmaschine, umgibt. Die selbstführende Dichtungsanordnung 16 umfaßt eine Dichtungskopfanordnung 20 und eine Dichtungssitzanordnung 18. Die selbstführende Dichtungsanordnung 16 verhindert, daß Flüssigkeit von einer Seite der Bohrung 14 durch die Dichtung 16 um die Welle 12 und in die innere Seite der Bohrung 14 eindringt. Die selbstführende Dichtungsanordnung 16 verhindert, daß Fluid von einem Ende der Pumpenanordnung zu dem unteren Teil der Pumpenanordnung dadurch austritt, daß eine Vorbelastungskraft mit der Feder 34 an der Dichtungsgrenzfläche 40 aufgebracht wird.

Die Dichtungskopfanordnung 20 umfaßt einen Dichtungsschuh 26, welcher vorzugsweise aus einem elastomeren Material hergestellt ist. Natürlich kann der Dichtungsschuh 26 auch aus irgendeinem anderen geeigneten, flexiblen, verformbaren Material hergestellt sein, welches den zugeordneten Betriebsbedingungen unter Berücksichtigung der jeweiligen Umgebungsbedingungen Stand halten kann. Der elastomere Dichtungsschuh 26 hat eine Umfangsgestalt und bildet die äußere Fläche der Dichtungskopfanordnung 20, welche in dem Gehäuse 10 mittels eines Festsitzes in einer zugeordneten Bohrung des Gehäuses 10 festgelegt ist. Der äußere Flächenteil des elastomeren Dichtungsschuhs 26 umfaßt auch eine abgewinkelte Ecke 42, welche eine Öffnung zwischen der Gehäusewand 20 und dem elastomeren Dichtungsschuh 26 frei läßt. Der elastomere Dichtungsschuh 26 ist im Querschnitt im allgemeinen U-förmig ausgebildet. Der elastomere Dichtungsschuh 26 hat einen inneren Schenkel 44 und einen äußeren Schenkel 46. Der elastomere Dichtungsschuh 26 umfaßt wenigstens ein Faltenbalgteil 48, welches zwischen dem inneren Schenkel 44 und dem äußeren Schenkel 46 angeordnet ist. Das Faltenbalgteil 48 des elastomeren Dichtungsschuhs 26 hat einen S-förmigen oder wellenähnlichen Querschnitt. Der äußere Schenkel 46 hat einen nach innen weisenden Flansch 50, auf welchem das Federsitzteil 32 angeordnet ist. Der äußere Schenkel 46 umfaßt eine Vertiefung oder einen Kanal 52 an seiner Innenfläche. Die Vertiefung 52 nimmt den nach außen weisenden Flansch 38 des Federsitzteils 32 auf und legt diesen fest. Der innere Schenkel 44 des elastomeren Dichtungsschuhs 26 umfaßt eine axiale Fläche 54, auf welcher die radiale Dichtscheibe 30 aufliegt. Der innere Schenkel 44 des elastomeren Dichtungsschuhs 26 umfaßt einen Vorsprung 36. Der Vorsprung 36 ist auf der äußeren Fläche des inneren Schenkels 44 vorgesehen.

Die Dichtungskopfanordnung 20 umfaßt auch einen Ring 28, welcher vorzugsweise aus einem metallischen Material hergestellt ist. Dieser kann natürlich auch aus irgendeinem keramischen Material oder einem anderen harten Kunststoffmaterial hergestellt sein. Der Ring 28 ist direkt in die innere Wand des elastomeren Dichtungsschuhteils 26 eingeformt und hat einen S-förmigen Querschnitt. Der Ring 28 hat eine axiale Fläche 58, welche parallel zu der Dichtfläche 56 der Dichtscheibe 30 ist. Der Ring 28 ist in Kontakt mit der Feder 34, welche eingesetzt wird, um eine Vorbelastungskraft auf die Dichtscheibe 30 aufzubringen.

Die Dichtungskopfanordnung 20 umfaßt auch einen rohrförmigen Federsitz 32. Der Federsitz 32 hat einen im allgemeinen U-förmigen Querschnitt. Der Federsitz 32 umfaßt einen nach außen verlaufenden Flansch 38 auf seinem äußeren Umfang, welcher mit der Vertiefung oder dem Kanal 52 in der inneren Wand des elastomeren Dichtungsschuhs 26 zusammenarbeitet. Hierdurch wird eine feste Anordnung des Federsitzes 32 an dem elastomeren Dichtungsschuh 26 erreicht, und es wird ferner auch erreicht, daß die Dichtungskopfanordnung 20 zu der Dichtungssitzanordnung 18 in vorbestimmter Weise genau ausgerichtet ist. Der Federsitz 32 ist auch in Kontakt mit dem Gehäuse 10. Der Federsitz 32 arbeitet mit dem Vorsprung 36 an der inneren Fläche zusammen. Das Zusammenarbeiten zwischen dem Vorsprung 36 und dem Federsitz 32 bildet einen Preßsitz oder dient zur Festlegung von anderen geeigneten Einrichtungen und die Auslegung ist ferner derart getroffen, daß sich Schwingungen dämpfen lassen, welche durch die Dichtungsscheibe 30, den Ring 28 und den Federsitz 32 gehen. Das Spiel zwischen dem äußeren Rand 60 des Rings 28 und der Innenwand 62 des Federsitzes 32 beläuft sich vorzugsweise auf 0,025 bis 0,15 mm (0,01 bis 0,06 inches), kann aber auch in einem Bereich von 0,0025 bis 1,52 mm (0,001 bis 0,060 inches) liegen. Dieser geringe oder mittelmäßige Festsitz oder Spielsitz der Federsitzanordnung 32 und des inneren Randes des Ringes 38 erzeugt einen Dämpfungseffekt und bringt Vorteile hinsichtlich der Selbstführung und Selbststeuerung für das gesamte Dichtungsteil mit sich. Dieser Effekt reduziert die Größe der Torsionskräfte und die radialen Verlagerungsschwankungen, welche ihre Ursache in Änderungen der Reibungskoeffizienten und/oder in Grenzflächenverschmutzungen an der Dichtfläche 56 haben. Der Federsitz 32 bildet einen mittelmäßigen Festsitz oder einen Spielsitz mit dem Ring 28, welcher an der Feder 34 angebracht ist, welche ihrerseits die Dichtungsfläche 56 konzentrisch zu dem festen Ende der Dichtungskopfanordnung 20 hält.

Die Dichtungskopfanordnung 20 umfaßt auch eine radial Dichtscheibe 30, welche mittels Preßsitz oder auf eine andere geeignete Art und Weise fest mit dem elastomeren Dichtungsschuh 26 verbunden ist. Die Dichtscheibe 30 hat eine Dichtsitzfläche 56, welche in konstantem Kontakt mit einer Dichtsitzanordnung 18 ist. Die Dichtscheibe 30 kann aus einem keramischen Material oder irgendeinem gehärteten Kautschukmaterial oder Kunststoffmaterial in Abhängigkeit von den Einsatzbedingungen der Dichtscheibe 30 hergestellt sein. Die Dichtscheibe 30 ist in konstantem Kontakt mit der Dichtsitzanordnung 18 durch eine Feder 34, welche eine Vorbelastungskraft liefert.

Die selbstführende Dichtungsanordnung 16 umfaßt auch eine Ventilsitzanordnung 18, welche einen keramischen, radialen Dichtungssitz 24 umfaßt, welcher in Umfangsrichtung ausgebildet und fest in einem elastomeren Umfangsschuhteil 22 vorgesehen ist. Das Schuhteil 22 ist mittels Festsitz oder auf andere Art und Weise fest in einer von der Dichtungskopfanordnung 20 gegenüberliegenden Fläche des Gehäuses 10 vorgesehen. Der keramische Dichtsitz 24 in der Dichtsitzanordnung 18 ist in konstantem Kontakt mit der Dichtfläche 56 an der Dichtscheibe 30 von der Dichtkopfanordnung 20. Es sollte noch erwähnt werden, daß in bevorzugter Weise der Dichtsitz 24 aus einem keramischen Material hergestellt ist, daß er aber auch aus vergleichbaren Materialien hergestellt werden kann.

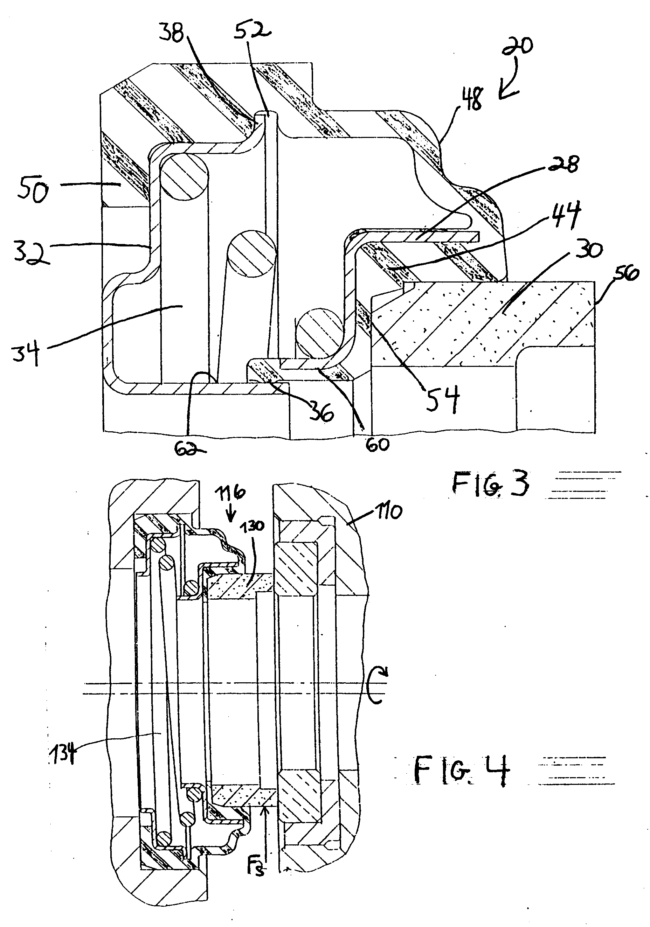

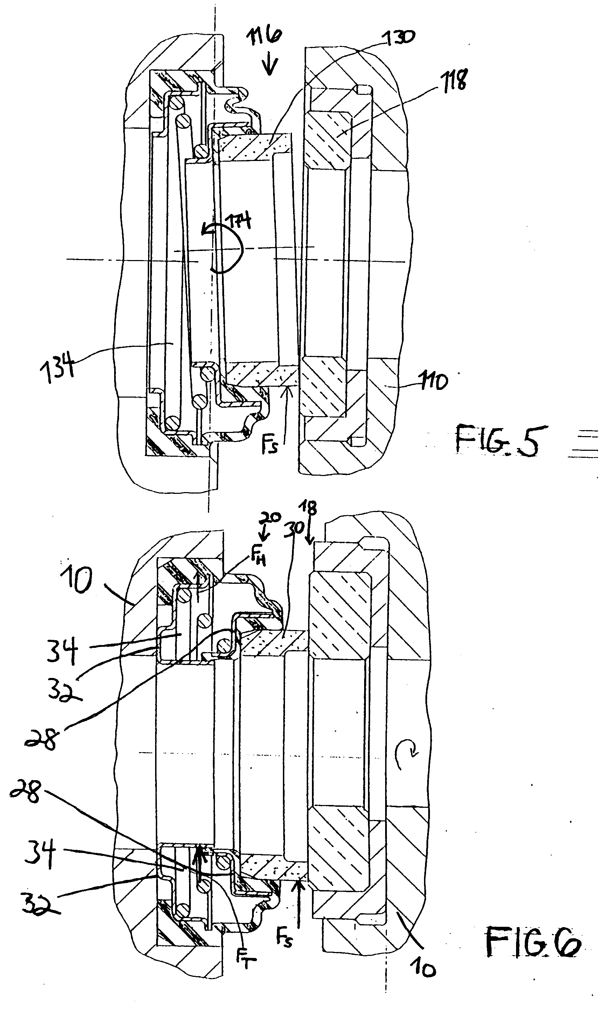

Die Figuren 4 und 5 zeigen eine übliche Dichtanordnung 116. Figur 5 zeigt die Dichtanordnung 116 mit einer Seitenkraft F_{S}, welche vom Boden her einwirkt. Diese erzeugt ein Moment 174 um das Federteil 134, welches die Dichtscheibe 30 zwingt, sich von dem Dichtsitz 118 zu lösen, so daß ein Zwischenraum für einen Fluidaustritt um die Welle 112 gebildet wird. Die Seitenkraft F_{S}, welche dieses Aufbrechen der Dichtung bewirkt, kann durch Dichtflächenschmierungsschwankungen, Exzentrizitätsschwankungen, einem unrunden Lauf oder anderen Kräften verursacht werden, welche in der Gehäuseeinheit 110 auftreten. Die radiale Verlagerung, welche durch eine solche Seitenkraft verursacht wird, erzeugt das Moment, um einen festen Punkt in dem Zwischenraum derart, daß der Dichtflächenkontakt verloren geht und wenn sich die Kraft verändert oder die Dicht- oder die Seitenkraft vollständig aufgehoben ist, eine plötzliche Veränderung der Dichtfläche auftritt, so daß sich diese mit Geräusch anlegt, wodurch man einen Fluidaustritt in dem Gehäuse und eine Geräuschentwicklung in demselben erhält.

Figur 6 zeigt die vorliegende Erfindung, wenn eine Seitenkraft F_{S} auf die Dichtscheibe 30 übertragen wird, wodurch eine radiale Verlagerung auftritt und ein Moment um einen festen Punkt im Raum erzeugt wird. Diese Seitenkraft F_{S} bei der Erfindung wird auf den Federsitz 32 übertragen, welcher fest mit dem Gehäuse 10 verbunden ist, und anschließend wird die Kraft F_{T}, welche auf den Federsitz 32 übertragen worden ist, auf das Gehäuse 10 als F_{H} übertragen.

Somit gleicht die Seitenkraft F_{S} die Federsitzkraft F_{T} aus, welche gleich der Kraft F_{H} ist, welche auf das Gehäuses wirkt. Hierdurch wird jegliche radiale Verlagerung an der Dichtscheibe 30 vermieden, und die Dichtfläche 56 wird in konstantem Kontakt mit der Dichtsitzanordnung 18 gehalten. Hierdurch wird jegliches Öffnen und Schließen der Dichtfläche unterdrückt, so daß sich auch Geräuscherscheinungen und Leckagen in der Gehäuseeinheit vermeiden lassen.

## Patentansprüche

1. Selbstführende Dichtungsanordnung, welche folgendes aufweist:
einen rohrförmigen Dichtungssitz (32);
eine Feder (34) in Kontakt mit dem Federsitz (32);
einen Dichtungsschuh (26) in Kontakt mit dem Federsitz (32) und einem festen Gehäuse (10), wobei der Dichtungsschuh (26) ein Balgteil (48) und einen Ring (28) umfaßt, welcher in den Dichtungsschuh (26) eingegossen ist, wobei der Ring (28) einen vorbestimmten Abstand von einer Randwand des Federsitzes (32) hat;
eine Dichtungsanordnung (18), welche einen Umfangsdichtsitz (24) umfaßt; und
eine Dichtscheibe (30) in dem Dichtungsschuh (26), welche eine Dichtfläche (56) hat, die in konstantem Kontakt mit dem Dichtsitz (24) ist.

2. Selbstführende Dichtungsanordnung nach Anspruch 1, **dadurch gekennzeichnet**, daß der Dichtungsschuh (26) aus einem elastomeren Material hergestellt ist.

3. Selbstführende Dichtungsanordnung nach einem der Ansprüche 1 oder 2, **dadurch gekennzeichnet**, daß der Dichtsitz (24) aus einem keramischen Material hergestellt ist.

4. Selbstführende Dichtungsanordnung nach einem der Ansprüche 1 bis 3, **dadurch gekennzeichnet**, daß die Dichtscheibe (30) aus einem keramischen Material hergestellt ist.

5. Selbstführende Dichtungsanordnung nach einem der Ansprüche 1 bis 4, **dadurch gekennzeichnet**, daß der vorbestimmte Abstand zwischen etwa 0,025 und 0,15 mm (0,001 inch und 0,006 inch) liegt.

6. Selbstführende Dichtungsanordnung nach einem der vorangehenden Ansprüche, **dadurch gekennzeichnet**, daß der Dichtungsschuh (26) zwischen dem Ring (28) und dem Federsitz (32) vorgesehen ist.

7. Selbstführende Dichtungsanordnung nach einem der vorangehenden Ansprüche, **dadurch gekennzeichnet**, daß ferner ein Vorsprung (36) an dem Dichtungsschuh (26) vorgesehen ist.

8. Selbstführende Dichtungsanordnung nach Anspruch 7, **dadurch gekennzeichnet**, daß der Vorsprung (36) in Kontakt mit dem Federsitz (32) ist.

9. Selbstführende Dichtungsanordnung, welche folgendes aufweist:
eine Dichtkopfanordnung (20), welche in einem Gehäuseteil (10) angeordnet ist;
eine Dichtsitzanordnung (18), welche in einer gegenüberliegenden Wand des Gehäuseteils (10) direkt von der Dichtkopfanordnung (20) ausgesehen angeordnet ist;
die Dichtkopfanordnung (20) in konstantem Kontakt mit der Dichtsitzanordnung (18) ist;
die Dichtkopfanordnung (20) ein Dichtungsschuhteil (26) umfaßt, welches im allgemeinen im Querschnitt U-förmig ausgestaltet ist, wobei das Dichtschuhteil ein Balgteil (48), und einen Vorsprung (36) auf einer Außenfläche eines Innenschenkels des Dichtschuhteils (26) umfaßt, die Dichtkopfanordnung (20) ferner ein Federsitzteil (32) umfaßt, welches einen im allgemeinen U-förmigen Querschnitt hat und mit dem Dichtschuhteil (26) an den beiden Stirnenden des Federsitzes (32) verbunden ist, und wobei der Federsitz (32) konstant mit dem Vorsprung (36) des Dichtschuhteils (26) zusammenarbeitet;
das Dichtschuhteil (26) ferner einen Ring (28) umfaßt, welcher einen Schenkelabschnitt hat, der in Kontakt mit einer Feder (34) ist, deren gegenüberliegendes Ende in Kontakt mit dem Federsitz (32) ist und auf diesem aufliegt, wobei der Ring (28) einen vorbestimmten Abstand von einem inneren Rand der Federsitzwand hat;
eine Umfangsdichtscheibe (30) in einer Vertiefung (52) des Dichtschuhteils (26); und
die Dichtsitzanordnung (18) einen Umfangsdichtsitz (24) in einem Dichtschuhteil (26) hat, wobei die Dichtscheibe (30) des Dichtschuhteils (26) eine Dichtfläche (56) hat, welche in konstantem Kontakt mit dem Dichtsitz (24) ist.

10. Selbstführende Dichtungsanordnung nach Anspruch 9, **dadurch gekennzeichnet**, daß der Dichtschuhteil (26) aus einem elastomeren Material hergestellt ist.

11. Selbstführende Dichtungsanordnung nach Anspruch 9 oder 10, **dadurch gekennzeichnet**, daß die Dichtscheibe (30) des Dichtungsschuhteils (26) aus einem Kautschukmaterial besteht.

12. Selbstführende Dichtungsanordnung nach einem der Ansprüche 9 bis 11, **dadurch gekennzeichnet**, daß das Dichtschuhteil (36) zwischen dem Ring (28) und dem Federsitz (32) angeordnet ist.

13. Selbstführende Dichtungsanordnung nach einem der Ansprüche 9 bis 12, **dadurch gekennzeichnet**, daß der vorbestimmte Abstand zwischen 0,025 und 0,15 mm (0,001 und 0,006 inches) liegt.

14. Selbstführende Dichtungsanordnung nach einem der Ansprüche 9 bis 13, **dadurch gekennzeichnet**, daß der Dichtsitz (24) aus einem keramikartigen Material hergestellt ist.

15. Selbstführende Dichtungsanordnung nach einem der Ansprüche 9 bis 14, **dadurch gekennzeichnet**, daß das Dichtschuhteil (26) eine abgewinkelte Ecke (42) umfaßt.

16. Selbstführende Dichtungsanordnung nach einem der Ansprüche 9 bis 15, **dadurch gekennzeichnet**, daß das Dichtschuhteil (26) einen Flanschabschnitt (50) zur Aufnahme des Federsitzes (32) umfaßt, wobei der Federsitz (32) mit dem elastomeren Dichtschuhteil (26) zur Bildung eines Festsitzes in der Dichtkopfanordnung (20) zusammenarbeitet.

17. Selbstführende Dichtungsanordnung nach einem der Ansprüche 9 bis 16, **dadurch gekennzeichnet**, daß die Feder (34) die Dichtscheibe (30) in direktem konstantem Kontakt mit dem Dichtsitz (24) vorbelastet, um zu verhindern, daß Flüssigkeit um eine Welle (40) und eine Bohrung in dem Gehäuse (10) austritt.

18. Selbstführende Dichtungsanordnung nach einem der vorangehenden Ansprüche, **dadurch gekennzeichnet**, daß sie für eine Welle in einer Pumpeneinheit vorgesehen ist.
